# EUROPEAN PATENT APPLICATION

(11) **EP 4 516 822 A1**
(43) Date of publication of application: **05.03.2025**
(21) Application number: 23796326.9
(22) Date of filing: 24.04.2023
(51) Int. Cl.: C08F 8/42, C08F 20/26, C08G 65/336

(54) **PRODUCTION METHOD FOR PRODUCING REACTIVE SILICON GROUP-CONTAINING ORGANIC POLYMER**

(30) Priority: 27.04.2022 JP 2022073452
(71) Applicant: AGC Inc., Chiyoda-ku Tokyo 100-8405 (JP); National Institute of Advanced Industrial Science and Technology, Chiyoda-ku Tokyo 100-8921 (JP)
(72) Inventor: HO, Samuel Ying Fu, Tokyo 100-8405 (JP); YAMASAKI, Kosuke, Tokyo 100-8405 (JP); SUNAYAMA, Yoshitaka, Tokyo 100-8405 (JP); NAKAJIMA, Yumiko, Tsukuba-shi, Ibaraki 305-8560 (JP); NAGANAWA, Yuki, Tsukuba-shi, Ibaraki 305-8560 (JP); SHIMOYAMA, Yoshihiro, Tsukuba-shi, Ibaraki 305-8560 (JP); GUO, Haiqing, Tsukuba-shi, Ibaraki 305-8560 (JP)
(74) Representative: Müller-Boré & Partner Patentanwälte PartG mbB
(86) International application number: PCT/JP2023/016126
(87) International publication number: WO 2023/210586

(57) **Abstract**

The present invention relates to a method for producing a reactive silicon group-containing organic polymer having a reactive silicon group represented by the following Formula (1),
the method including reacting an unsaturated group-containing organic polymer with a silylating agent in the presence of a group 8 metal catalyst and a co-catalyst containing a carboxylic acid compound having a carbon-carbon triple bond,

-SiRₐX₃₋ₐ Formula (1)

[In the Formula (1), R is a monovalent organic group having 1 to 20 carbon atoms and represents an organic group other than a hydrolyzable group, and X represents a hydroxyl group, a halogen atom, or a hydrolyzable group; a is an integer from 0 to 2; when a is 2, R groups may be the same as or different from each other, and when a is 0 or 1, X groups may be the same as or different from each other.]

## Description

### [Technical Field]

The present invention relates to a method for producing a reactive silicon group-containing organic polymer.

Priority is claimed on Japanese Patent Application No. 2022-073452, filed April 27, 2022, the content of which is incorporated herein by reference.

### [Background Art]

It has been known that a polymer having a reactive silicon group has a property to crosslink even at room temperature through the formation of siloxane bonds accompanied by a hydrolysis reaction and the like of the reactive silicon group due to hygroscopic moisture or the like, thereby obtaining a rubber-like cured product.

Among these polymers having a reactive silicon group, oxyalkylene polymers, saturated hydrocarbon polymers, alkyl acrylate polymers, and alkyl methacrylate polymers have already been industrially produced and widely used in applications such as sealing materials, adhesives and coating materials. Polymers having a reactive silicon group undergo an increase in molecular weight through a silanol condensation reaction between the polymers to form a cross-linked product.

A polymer having a reactive silicon group is produced by, for example, producing a polymer having an unsaturated group as a terminal group, followed by hydrosilylation using a silylating agent. However, there is a problem in that the hydrosilylation reaction involves many side reactions, and reactive silicon groups are not introduced into all of the terminal groups, resulting in a decrease in the silylation rate, which is the proportion of reactive silicon groups in the terminal groups. Therefore, promotion of the hydrosilylation reaction has been studied so far, and it has been known that the silylation rate can be improved by adding a carboxylic acid compound to a group 8 metal catalyst used in the hydrosilylation reaction (for example, Patent Document 1 and Patent Document 2).

### [Citation List]

### [Patent Documents]

[Patent Document 1] Japanese Unexamined Patent Application, First Publication No. 2000-95785
[Patent Document 2] Japanese Unexamined Patent Application, First Publication No. 2000-143679

### [Summary of Invention]

### [Technical Problem]

However, the effect of promoting the hydrosilylation reaction in Patent Document 1 and Patent Document 2 is not sufficient, and further improvements have been required.

The present invention has been made in view of the above circumstances, and has an object of providing a method for producing a reactive silicon group-containing organic polymer which is capable of, when a hydrosilylation reaction of an unsaturated group-containing organic polymer is carried out using a silylating agent, further promoting the hydrosilylation reaction than conventional methods.

### [Solution to Problem]

The present invention includes the following aspects [1] to [12].
[1] A method for producing a reactive silicon group-containing organic polymer having a reactive silicon group represented by the following Formula (1), the method including reacting an unsaturated group-containing organic polymer with a silylating agent in the presence of a group 8 metal catalyst and a co-catalyst containing a carboxylic acid compound having a carbon-carbon triple bond,

   -SiRₐX₃₋ₐ Formula (1)

   [In the Formula (1), R is a monovalent organic group having 1 to 20 carbon atoms and represents an organic group other than a hydrolyzable group, and X represents a hydroxyl group, a halogen atom, or a hydrolyzable group; a is an integer from 0 to 2; when a is 2, R groups may be the same as or different from each other, and when a is 0 or 1, X groups may be the same as or different from each other.]
[2] The method for producing a reactive silicon group-containing organic polymer according to [1], wherein the aforementioned group 8 metal catalyst has at least one metal selected from the group consisting of cobalt, nickel, ruthenium, rhodium, palladium, iridium, and platinum; has at least one metal selected from the group consisting of ruthenium, palladium, and platinum; or has platinum.
[3] The method for producing a reactive silicon group-containing organic polymer according to [1] or [2], wherein the aforementioned carboxylic acid compound having a carbon-carbon triple bond has 3 to 17 carbon atoms, 3 to 10 carbon atoms, or 4 to 10 carbon atoms.
[4] The method for producing a reactive silicon group-containing organic polymer according to any one of [1] to [3], wherein the aforementioned carboxylic acid compound having a carbon-carbon triple bond is a carboxylic acid compound having a carbon-carbon triple bond at an α-position carbon.
[5] The method for producing a reactive silicon group-containing organic polymer according to any one of [1] to [4], wherein a molar ratio of the aforementioned carboxylic acid compound having a carbon-carbon triple bond with respect to the aforementioned group 8 metal catalyst is from 0.01 to 25, from 0.05 to 20, or from 0.1 to 10.
[6] The method for producing a reactive silicon group-containing organic polymer according to any one of [1] to [5], wherein the aforementioned co-catalyst further contains a carboxylic acid compound having a carbon-carbon double bond.
[7] The method for producing a reactive silicon group-containing organic polymer according to [6], wherein the aforementioned carboxylic acid compound having a carbon-carbon double bond is a carboxylic acid compound having a carbon-carbon double bond at an α-position carbon.
[8] The method for producing a reactive silicon group-containing organic polymer according to [6] or [7], wherein an amount of the aforementioned carboxylic acid compound having a carbon-carbon double bond used is from 0.1 to 10 mol, or from 0.5 to 5 mol with respect to 1 mol of unsaturated groups in the aforementioned unsaturated group-containing organic polymer.
[9] The method for producing a reactive silicon group-containing organic polymer according to [1] to [8], wherein the aforementioned co-catalyst further contains a silane compound represented by the following Formula (2),

   HSiR¹₃ Formula (2)

   [In the Formula (2), R¹ is a monovalent organic group having 1 to 20 carbon atoms, and represents an organic group other than a hydrolyzable group; and R¹ groups may be the same as or different from each other.]
[10] The method for producing a reactive silicon group-containing organic polymer according to [9], wherein a molar ratio of the aforementioned silane compound with respect to the aforementioned carboxylic acid compound having a carbon-carbon triple bond is from 0.05 to 20, or from 0.1 to 10.
[11] The method for producing a reactive silicon group-containing organic polymer according to [1] to [10], wherein the aforementioned reactive silicon group-containing organic polymer is a polymer having a unit based on an oxyalkylene monomer.
[12] The method for producing a reactive silicon group-containing organic polymer according to any one of [1] to [10], wherein the aforementioned reactive silicon group-containing organic polymer is a polymer having a unit based on an alkyl acrylate monomer or an alkyl methacrylate monomer.

### [Advantageous Effects of Invention]

According to the present invention, it is possible to provide a method for producing a reactive silicon group-containing organic polymer which is capable of, when a hydrosilylation reaction of an unsaturated group-containing organic polymer is carried out using a silylating agent, further promoting the hydrosilylation reaction than conventional methods.

### [Description of Embodiments]

The meanings and definitions of the terms used in the present specification are as follows.

A numerical range represented by a symbol "-" means a numerical range in which numerical values before and after this symbol "-" are the lower limit and upper limit values.

The term "α-position carbon" means a carbon atom bonded to a carbon atom of a carboxy group of a carboxylic acid compound or a carbonyl group derived from a carboxy group.

A "unit" that constitutes a polymer means an atomic group directly formed by polymerization of a monomer.

An "oxyalkylene polymer" is a polymer composed of a main chain and a terminal group. A "main chain" in an oxyalkylene polymer includes a residue of an initiator and a repeating unit (polyoxyalkylene chain) based on an oxyalkylene monomer. A "terminal group" in an oxyalkylene polymer means an atomic group containing an oxygen atom closest to the molecular terminal among oxygen atoms in the aforementioned polyoxyalkylene chain. However, if the atomic group contains a residue of an initiator, it is not regarded as a terminal group.

The term "(meth)acrylate polymer" refers to a polymer having one or both of a polymer chain formed from a repeating unit based on an alkyl acrylate monomer and a polymer chain formed from a repeating unit based on an alkyl methacrylate monomer.

The term "(meth)acrylic acid" means one or both of acrylic acid and methacrylic acid.

An "unsaturated group" means a monovalent group containing a carbon-carbon double bond or carbon-carbon triple bond at the end of the molecule.

A "carboxylic acid compound" means a compound having a carboxy group and a derivative thereof. Examples of the derivative include esters and carboxylic acid anhydrides.

The term "USV" represents an unsaturated group value of a polymer, and can be measured in accordance with a method for measuring an unsaturated group value (Wijs method).

A "silylation rate" can be measured by NMR analysis and is determined by the following formula.

Silylation rate = (number of reactive silicon groups) / [(number of reactive silicon groups) + (number of carbon-carbon double bonds) + (number of carbon-carbon triple bonds) × 2]

The number average molecular weight (Mn) and mass average molecular weight (Mw) in the present specification are polystyrene equivalent molecular weights measured by gel permeation chromatography (GPC) with tetrahydrofuran as an eluent using a polystyrene polymer with a known molecular weight and producing a calibration curve. A molecular weight distribution (Mw/Mn) is a ratio of Mw with respect to Mn.

### <<Method for producing reactive silicon group-containing organic polymer>>

The method for producing a reactive silicon group-containing organic polymer according to the present embodiment includes reacting an unsaturated group-containing organic polymer with a silylating agent in the presence of a group 8 metal catalyst and a co-catalyst containing a carboxylic acid compound having a carbon-carbon triple bond.

The reactive silicon group-containing organic polymer contains a reactive silicon group represented by the Formula (1) described below.

### <Unsaturated group-containing organic polymer>

Examples of the unsaturated group-containing organic polymer include, but are not limited to, unsaturated group-containing polyether-based polymers and unsaturated group-containing vinyl-based polymers.

As the unsaturated group-containing polyether-based polymer, an unsaturated group-containing oxyalkylene polymer is preferred. As the unsaturated group-containing vinyl-based polymer, an unsaturated group-containing (meth)acrylate polymer is preferred.

The Mn of the unsaturated group-containing organic polymer is preferably from 500 to 200,000, and the Mw/Mn is preferably not more than 1.80. The number of unsaturated groups within one molecule of the unsaturated group-containing organic polymer is preferably from 1.0 to 8.0, and more preferably from 1.0 to 6.0.

### (Unsaturated group-containing oxyalkylene polymer)

The unsaturated group-containing oxyalkylene polymer is a polymer having a repeating unit based on an unsaturated group and an oxyalkylene monomer. The unsaturated group-containing oxyalkylene polymer is composed of a main chain and a terminal group, the main chain has a residue of an initiator and a repeating unit based on an oxyalkylene monomer, and the terminal group has an unsaturated group. It is preferable that the main chain is composed of a residue of an initiator and a repeating unit based on an oxyalkylene monomer, and the terminal group has an oxygen atom and an unsaturated group. Examples of the oxyalkylene monomer include an ethylene oxide monomer, a propylene oxide monomer, a butylene oxide monomer, and a tetramethylene oxide monomer. A propylene oxide monomer is preferred. When the polyoxyalkylene chain in the main chain of the unsaturated group-containing oxyalkylene polymer is a copolymer chain of two or more types of oxyalkylene monomers, it may be a block polymer chain or a random polymer chain.

The number of terminal groups within one molecule of the unsaturated group-containing oxyalkylene polymer is preferably from 1 to 8, more preferably from 2 to 6, and still more preferably from 2 to 4.

The number of unsaturated groups within one molecule of the unsaturated group-containing oxyalkylene polymer is preferably from 1.0 to 8.0, more preferably from 2.0 to 6.0, and still more preferably from 2.0 to 4.0.

The number of unsaturated groups per terminal group of the unsaturated group-containing oxyalkylene polymer is preferably from 0.5 to 4.0, and more preferably from 0.6 to 2.0.

The Mn of the unsaturated group-containing oxyalkylene polymer is preferably from 2,000 to 100,000, and more preferably from 5,000 to 50,000.

The Mw/Mn of the unsaturated group-containing oxyalkylene polymer is preferably 1.80 or less, more preferably 1.50 or less, still more preferably 1.40 or less, and particularly preferably 1.20 or less. The Mw/Mn of the unsaturated group-containing oxyalkylene polymer is preferably from 1.00 to 1.80, more preferably from 1.00 to 1.50, still more preferably from 1.00 to 1.40, and particularly preferably from 1.00 to 1.20.

### (Method for producing unsaturated group-containing oxyalkylene polymer)

A conventionally known method can be used as the method for producing an unsaturated group-containing oxyalkylene polymer. For example, it can be produced by ring-opening addition polymerization of one or more oxyalkylene monomers to an initiator and converting the terminal hydroxyl group of the obtained polymer into an alkenyloxy group or an alkynyloxy group. A conventionally known material can be used as a secondary material such as an initiator necessary for polymerization, and reaction conditions such as reaction temperature and reaction pressure can also be appropriately selected.

A conventionally known catalyst can be used as the ring-opening polymerization catalyst when carrying out ring-opening addition polymerization of one or more oxyalkylene monomers to the initiator. Examples thereof include an alkali catalyst such as KOH, a metal compound-porphyrin complex catalyst such as a complex obtained by reacting an organic aluminum compound with porphyrin, a double metal cyanide complex catalyst, and a catalyst composed of a phosphazene compound.

A double metal cyanide complex catalyst is preferred because the molecular weight distribution of the polymer can be narrowed and a curable composition with low viscosity can be easily obtained. A conventionally known compound can be used as the double metal cyanide complex catalyst. A known method can be employed as a method for producing a polymer using a double metal cyanide complex. For example, compounds and production methods disclosed in International Patent Publication No. 2003/062301, International Patent Publication No. 2004/067633, Japanese Unexamined Patent Application, First Publication No. 2004-269776, Japanese Unexamined Patent Application, First Publication No. 2005-15786, International Patent Publication No. 2013/065802 and Japanese Unexamined Patent Application, First Publication No. 2015-010162 can be used.

Examples of methods for converting the terminal hydroxyl group of the polymer into an alkenyloxy group or an alkynyloxy group include the following three methods. The first method is a method of reacting a halogenated hydrocarbon compound having a carbon-carbon double bond after causing an alkali metal salt to act on the polymer. The second method is a method of reacting an epoxy compound having an unsaturated group after causing an alkali metal salt to act on the polymer, and then reacting a halogenated hydrocarbon compound having an unsaturated group. The third method is a method of reacting a halogenated hydrocarbon compound having a carbon-carbon triple bond after causing an alkali metal salt to act on the polymer.

### (Unsaturated group-containing (meth)acrylate polymer)

An unsaturated group-containing (meth)acrylate polymer is a polymer having an unsaturated group and a repeating unit based on an alkyl acrylate monomer or an alkyl methacrylate monomer. The unsaturated group-containing (meth)acrylate polymer may have a repeating unit based on an alkyl acrylate monomer or an alkyl methacrylate monomer and another monomer copolymerizable therewith.

As a monomer constituting the (meth)acrylate polymer, for example, conventionally known monomers described in Japanese Unexamined Patent Application, First Publication No. Hei 11-130931 can be used.

The content of the unit based on an alkyl (meth)acrylate monomer is preferably 50% by mass or more, more preferably 70% by mass or more, and may be 100% by mass, with respect to all monomer units constituting the unsaturated group-containing (meth)acrylate polymer. The content of the unit based on an alkyl (meth)acrylate monomer with respect to all monomer units constituting the unsaturated group-containing (meth)acrylate polymer is preferably from 50 to 100% by mass, and more preferably from 70 to 100% by mass.

The number of unsaturated groups within one molecule of the unsaturated group-containing (meth)acrylate polymer is preferably from 1.0 to 8.0, and more preferably from 1.0 to 6.0.

The Mn of the unsaturated group-containing (meth)acrylate polymer is preferably from 500 to 100,000, and more preferably from 1,000 to 80,000.

The Mw/Mn of the unsaturated group-containing (meth)acrylate polymer is preferably 1.80 or less, more preferably 1.50 or less, still more preferably 1.40 or less, and particularly preferably 1.20 or less. The Mw/Mn of the unsaturated group-containing oxyalkylene polymer is preferably from 1.00 to 1.80, more preferably from 1.00 to 1.50, still more preferably from 1.00 to 1.40, and particularly preferably from 1.00 to 1.20.

### (Method for producing unsaturated group-containing (meth)acrylate polymer)

A conventionally known method can be used as the method for producing an unsaturated group-containing (meth)acrylate polymer. Examples thereof include a method of polymerizing an alkyl (meth)acrylate monomer and a compound having an unsaturated group, and a method of reacting a compound having two alkenyl groups at the final stage of the polymerization reaction using a living radical polymerization method. In particular, a living radical polymerization method is preferred because a polymer having an arbitrary molecular weight, a narrow molecular weight distribution, and a low viscosity can be obtained.

Examples of the living radical polymerization method include an atom transfer radical polymerization method (ATRP method) in which an alkyl (meth)acrylate monomer is polymerized using an organic halide or a halogenated sulfonyl compound as an initiator and a transition metal complex as a catalyst. Polymerization can be performed by a conventionally known polymerization method described in Japanese Unexamined Patent Application, First Publication No. Hei 11-130931 as the atom transfer radical polymerization method (ATRP method). The unsaturated group-containing (meth)acrylate polymer can be obtained by polymerizing an alkyl (meth)acrylate monomer by atom transfer radical polymerization (ATRP method), and then introducing an unsaturated group by reacting, for example, a compound having at least two alkenyl groups such as 1,5-hexadiene, 1,7-octadiene, and 1,9-decadiene. A "terminal group" in the (meth)acrylate polymer obtained by the ATRP method refers to an atomic group containing, among the carbon atoms in the chain of the (meth)acrylate polymer, the carbon atom closest to the molecular end, and if the atomic group contains a residue of an initiator, it is not regarded as a terminal group.

### <Silylating agent>

Examples of the silylating agent include a compound having both a group capable of forming a bond by reacting with an unsaturated group (for example, a sulfanyl group) and a reactive silicon group represented by the Formula (1) described below, and a hydrosilane compound (for example, HSiRₐX₃₋ₐ, provided that R, X, and a are the same as those defined in the Formula (1) described below). More specifically, trimethoxysilane, triethoxysilane, triisopropoxysilane, tris(2-propenyloxy)silane, triacetoxysilane, dimethoxymethylsilane, diethoxymethylsilane, dimethoxyethylsilane, diisopropoxymethylsilane, (α-chloromethyl)dimethoxysilane and (α-chloromethyl)diethoxysilane can be exemplified. From the viewpoint of high activity and favorable curability, trimethoxysilane, triethoxysilane, dimethoxymethylsilane, and diethoxymethylsilane are preferred, and dimethoxymethylsilane or trimethoxysilane is more preferred.

For example, when an unsaturated group-containing organic polymer is hydrosilylated using dimethoxymethylsilane, a polymer having a dimethoxymethylsilyl group (a type of reactive silicon group) can be obtained. A polymer having a reactive silicon group gives a cross-linked product through a hydrolysis reaction of the silyl group due to hygroscopic moisture in the air or the like, followed by a silanol condensation reaction with other polymer molecules. Polymers having reactive silicon groups are used, for example, in applications that require weather resistance, heat resistance, and resistance to moisture permeability, such as adhesives, pressure-sensitive adhesives, coating materials, sealing materials, and waterproofing materials.

When the unsaturated group of the unsaturated group-containing organic polymer is a carbon-carbon double bond, the amount of the silylating agent used is preferably from 1 to 20 mol, and more preferably from 1 to 2 mol, with respect to 1 mol of the unsaturated group. When the unsaturated group of the unsaturated group-containing organic polymer is a carbon-carbon triple bond, the amount of the silylating agent used is preferably from 2 to 40 mol, and more preferably from 2 to 4 mol, with respect to 1 mol of the unsaturated group. When the amount used is equal to or less than the above upper limit value, it is preferable because the cost is reduced and the operation for removing the silylating agent after the reaction becomes easy and simple. When the amount used is equal to or more than the above lower limit value, the silylation rate becomes high, which is preferable.

### <Group 8 metal catalyst>

A group 8 metal catalyst is a catalyst having a group 8 metal in the short form periodic table. The group 8 metal is preferably at least one metal selected from the group consisting of cobalt, nickel, ruthenium, rhodium, palladium, iridium, and platinum, more preferably at least one metal selected from the group consisting of ruthenium, palladium, and platinum, and still more preferably platinum. The group 8 metal catalyst is preferably an elementary substance of a group 8 metal, a support in which a group 8 metal is supported on a carrier, a group 8 metal salt, or a complex of a group 8 metal and an organic compound. More specifically, for example, an elementary substance of platinum, a platinum metal on a carrier such as alumina, silica, and carbon black on which solid platinum is supported, a complex of chloroplatinic acid with an alcohol, an aldehyde, a ketone or the like as a ligand, or a complex of chloroplatinic acid, and a platinum complex such as a platinum-olefin complex [for example, Pt(CH₂=CH₂)₂(PPh₃) and Pt(CH₂=CH₂)₂Cl_{2]}, a platinum-acetylacetonate complex [Pt(C₅H₇O₂)₂], a platinum-vinylsiloxane complex [Pt{(vinyl)Me₂SiOSiMe₂(vinyl)}, Pt{Me(vinyl)SiO}₄], a platinum-phosphine complex [Ph(PPh₃)₄, Pt(PBu₃)₄], and a platinum-phosphite complex [Pt{P(OPh)₃}₄] are preferred.

Any one of these group 8 metal catalysts may be used alone, or two or more types thereof may be used in combination. Chloroplatinic acid, platinum olefin complexes, platinum-acetylacetonate complexes, and platinum-vinylsiloxane complexes are preferred because they have high reaction activity. More specifically, a hexachloroplatinic (IV) acid hexahydrate and a platinum (0)-1,3-divinyl-1,1,3,3-tetramethyldisiloxane complex are preferred.

There is no particular restriction on the amount of the group 8 metal catalyst used, but the amount of the group 8 metal catalyst used is preferably from 1.0 to 20 ppm by mass, and more preferably from 1.5 to 10 ppm by mass with respect to the total mass of the unsaturated group-containing organic polymer. When the amount of the group 8 metal catalyst used is equal to or more than the lower limit value of the above range, the hydrosilylation reaction tends to proceed sufficiently, and when the amount is equal to or less than the upper limit value of the above range, it is preferable from a cost perspective.

### <Co-catalyst>

The co-catalyst contains a carboxylic acid compound having a carbon-carbon triple bond. Examples of the carboxylic acid compound having a carbon-carbon triple bond include monocarboxylic acids having a carbon-carbon triple bond, dicarboxylic acids having a carbon-carbon triple bond, carboxylic acid anhydrides having a carbon-carbon triple bond, and esters having a carbon-carbon triple bond.

A monocarboxylic acid having a carbon-carbon triple bond is a compound in which a hydrogen atom bonded to carbon in a hydrocarbon compound having a carbon-carbon triple bond is replaced with a carboxy group.

A dicarboxylic acid having a carbon-carbon triple bond is a compound in which two hydrogen atoms bonded to carbon in a hydrocarbon compound having a carbon-carbon triple bond are replaced with carboxy groups.

A carboxylic acid anhydride having a carbon-carbon triple bond is a compound obtained by dehydration condensation of carboxy groups of two of the above carboxylic acids having a carbon-carbon triple bond; a compound obtained by dehydration condensation of a carboxy group of the above carboxylic acid having a carbon-carbon triple bond and a carboxy group of a carboxylic acid having no carbon-carbon triple bond; or a compound obtained by dehydration condensation of two carboxy groups within one molecule of a dicarboxylic acid having a carbon-carbon triple bond.

An ester having a carbon-carbon triple bond is a compound in which a hydrogen atom in a carboxy group of the above carboxylic acid having a carbon-carbon triple bond is replaced with a monovalent hydrocarbon group. As the monovalent hydrocarbon group, a monovalent saturated hydrocarbon group is preferred, and examples thereof include a linear or branched alkyl group and a cycloalkyl group. Among these, a methyl group and an ethyl group are preferred.

Examples of the above hydrocarbon compound having a carbon-carbon triple bond include a compound having a carbon-carbon triple bond in which at least one of carbon-carbon single bonds in a saturated hydrocarbon compound is replaced with a carbon-carbon triple bond. Examples of the above saturated hydrocarbon compound include a linear or branched alkane and a cycloalkane. The hydrogen atom in the above compound having a carbon-carbon triple bond may be replaced with a substituent. Examples of the substituent include an aromatic group and a hydroxyl group.

The number of carbon atoms in the above carboxylic acid compound having a carbon-carbon triple bond is preferably 3 or more and 17 or less, more preferably 3 or more and 10 or less, and particularly preferably 4 or more and 10 or less. The number of carbon atoms in the above monocarboxylic acid compound having a carbon-carbon triple bond is preferably 3 or more and 17 or less, and more preferably 3 or more and 10 or less. The number of carbon atoms in the above dicarboxylic acid having a carbon-carbon triple bond is preferably 4 or more and 10 or less. The number of carbon atoms in the above carboxylic acid anhydride having a carbon-carbon triple bond is preferably 4 or more and 10 or less. The number of carbon atoms in the above ester having a carbon-carbon triple bond is preferably 4 or more and 17 or less, and more preferably 4 or more and 10 or less.

The number of triple bonds within one molecule in the above carboxylic acid compound having a carbon-carbon triple bond is preferably one or two, and more preferably one.

As the carboxylic acid compound having a carbon-carbon triple bond, a carboxylic acid compound having a carbon-carbon triple bond at the α-position carbon is preferred. Examples of the carboxylic acid compound having a carbon-carbon triple bond at the α-position carbon include monocarboxylic acids having a carbon-carbon triple bond at the α-position carbon, dicarboxylic acids having a carbon-carbon triple bond at the α-position carbon, carboxylic acid anhydrides having a carbon-carbon triple bond at the α-position carbon, or esters having a carbon-carbon triple bond at the α-position carbon, and monocarboxylic acids having a carbon-carbon triple bond at the α-position carbon and esters having a carbon-carbon triple bond at the α-position carbon are preferred, and monocarboxylic acids having a carbon-carbon triple bond at the α-position carbon are more preferred. In the case of dicarboxylic acids, although there are dicarboxylic acids having carbon-carbon triple bonds at both α-positions and dicarboxylic acids having a carbon-carbon triple bond at only one α-position, dicarboxylic acids having carbon-carbon triple bonds at both α-positions are preferred.

The number of carbon atoms in the above carboxylic acid compound having a carbon-carbon triple bond at the α-position carbon is preferably 3 or more and 17 or less, more preferably 3 or more and 10 or less, and particularly preferably 4 or more and 10 or less.

As the monocarboxylic acid having a carbon-carbon triple bond at the α-position carbon, phenylpropiolic acid, propiolic acid, 2-butynoic acid, 2-heptynoic acid, 2-methyl-3-butynoic acid, 2-hydroxy-3-butynoic acid and 3-butynoic acid are preferred, and phenylpropiolic acid is more preferred. Examples of the dicarboxylic acid having a carbon-carbon triple bond at the α-position carbon include acetylenedicarboxylic acid. Examples of the carboxylic acid anhydride having a carbon-carbon triple bond at the α-position carbon include propiolic acid anhydride. Examples of the ester having a carbon-carbon triple bond at the α-position carbon include methyl phenylpropiolate.

When a carboxylic acid compound having a carbon-carbon triple bond at the α-position carbon has two or more triple bonds within one molecule, it may have a carbon-carbon triple bond in addition to the α-position carbon.

It is preferable to further include a carboxylic acid compound having a carbon-carbon double bond as a co-catalyst because higher silylation can be achieved. However, in the case of a carboxylic acid compound having a carbon-carbon triple bond and a carbon-carbon double bond within one molecule, it is regarded as a carboxylic acid compound having a carbon-carbon triple bond. That is, a "carboxylic acid compound having a carbon-carbon double bond" in the present specification is a carboxylic acid compound having a carbon-carbon double bond and not having a carbon-carbon triple bond.

Examples of the carboxylic acid compound having a carbon-carbon double bond include monocarboxylic acids having a carbon-carbon double bond, dicarboxylic acids having a carbon-carbon double bond, carboxylic acid anhydrides having a carbon-carbon double bond, and esters having a carbon-carbon double bond.

A monocarboxylic acid having a carbon-carbon double bond is a compound in which a hydrogen atom bonded to carbon in a hydrocarbon compound having a carbon-carbon double bond is replaced with a carboxy group.

A dicarboxylic acid having a carbon-carbon double bond is a compound in which two hydrogen atoms bonded to carbon in a hydrocarbon compound having a carbon-carbon double bond are replaced with carboxy groups.

A carboxylic acid anhydride having a carbon-carbon double bond is a compound obtained by dehydration condensation of carboxy groups of two of the above carboxylic acids having a carbon-carbon double bond; a compound obtained by dehydration condensation of a carboxy group of the above carboxylic acid having a carbon-carbon double bond and a carboxy group of a carboxylic acid having no carbon-carbon double bond; or a compound obtained by dehydration condensation of two carboxy groups within one molecule of a dicarboxylic acid having a carbon-carbon double bond.

An ester having a carbon-carbon double bond is a compound in which a hydrogen atom in a carboxy group of the above monocarboxylic acid having a carbon-carbon double bond is replaced with a monovalent hydrocarbon group. As the monovalent hydrocarbon group, a monovalent saturated hydrocarbon group is preferred, and examples thereof include a linear or branched alkyl group and a cycloalkyl group. Among these, a methyl group and an ethyl group are preferred.

The number of carbon atoms in the above carboxylic acid compound having a carbon-carbon double bond is preferably 3 or more and 18 or less, more preferably 4 or more and 18 or less, and still more preferably 4 or more and 10 or less.

As the carboxylic acid compound having a carbon-carbon double bond, a carboxylic acid compound having a carbon-carbon double bond at the α-position carbon is preferred. Examples of the carboxylic acid compound having a carbon-carbon double bond at the α-position carbon include a monocarboxylic acid having a carbon-carbon double bond at the α-position carbon, a dicarboxylic acid having a carbon-carbon double bond at the α-position carbon, a carboxylic acid anhydride having a carbon-carbon double bond at the α-position carbon, and an ester having a carbon-carbon double bond at the α-position carbon, and a monocarboxylic acid having a carbon-carbon double bond at the α-position carbon and an ester having a carbon-carbon double bond at the α-position carbon are preferred, a monocarboxylic acid having a carbon-carbon double bond at the α-position carbon is more preferred, and a monocarboxylic acid having a carbon-carbon double bond at the α-position carbon and having 3 to 7 carbon atoms is particularly preferred. Examples of the monocarboxylic acid having a carbon-carbon double bond at the α-position carbon and having 3 to 7 carbon atoms include 2-hexenoic acid and crotonic acid.

Examples of the above hydrocarbon compound having a carbon-carbon double bond include a compound having a carbon-carbon double bond in which at least one of the carbon-carbon bonds in a saturated hydrocarbon compound is replaced with a carbon-carbon double bond. Examples of the above saturated hydrocarbon compound include a linear or branched alkane and a cycloalkane. The hydrogen atom in the above compound having a carbon-carbon double bond may be replaced with a substituent. Examples of the substituent include an aromatic group and a hydroxyl group.

The number of double bonds within one molecule in the above carboxylic acid compound having a carbon-carbon double bond is preferably one or two, and more preferably one.

When a carboxylic acid compound having a carbon-carbon double bond at the α-position carbon has two or more double bonds within one molecule, it may have a carbon-carbon double bond in addition to the α-position carbon.

It is preferable to further include a silane compound represented by the following Formula (2) as a co-catalyst because higher silylation can be achieved.

HSiR¹₃ Formula (2)

In the above Formula (2), R¹ is a monovalent organic group having 1 to 20 carbon atoms, and represents an organic group other than a hydrolyzable group. R¹ groups may be the same as or different from each other.

R¹ is preferably at least one selected from the group consisting of an alkyl group, a cycloalkyl group, and an aryl group, and is more preferably at least one selected from the group consisting of a linear or branched alkyl group having 1 to 4 carbon atoms, a cyclohexyl group, a phenyl group, and a benzyl group. A methyl group or an ethyl group is preferred, and an ethyl group is particularly preferred. Further, R¹ groups are preferably the same.

Examples of the above silane compound include trimethylsilane, triethylsilane, triisopropylsilane, triphenylsilane, dimethylethylsilane, and dimethylphenylsilane, and triethylsilane is preferred.

When the above silane compound is included as a co-catalyst, any combination of a carboxylic acid compound having a carbon-carbon triple bond and the above silane compound, or a carboxylic acid compound having a carbon-carbon triple bond, a carboxylic acid having a carbon-carbon double bond and the above silane compound may be adopted, and it is preferable that a carboxylic acid compound having a carbon-carbon triple bond, a carboxylic acid compound having a carbon-carbon double bond, and the above silane compound are included.

A molar ratio of the carboxylic acid compound having a carbon-carbon triple bond with respect to the group 8 metal catalyst is preferably from 0.01 to 25, more preferably from 0.05 to 20, and particularly preferably from 0.1 to 10. When it is equal to or more than the lower limit value of this range, the silylation rate is further improved. When it is equal to or less than the upper limit value of this range, the amount of acid in the solution is suppressed, and thickening is suppressed.

When a carboxylic acid compound having a carbon-carbon double bond is included as a co-catalyst, the amount of the carboxylic acid compound having a carbon-carbon double bond used is preferably from 0.1 to 10 mol, and more preferably from 0.5 to 5 mol with respect to 1 mol of unsaturated groups in the unsaturated group-containing organic polymer. When it is equal to or more than the lower limit value of this range, the silylation rate is further improved. When it is equal to or less than the upper limit value of this range, the amount of acid in the solution is suppressed, and thickening of the composition containing the unsaturated group-containing organic polymer or the reactive silicon group-containing organic polymer is suppressed.

When the above silane compound represented by the Formula (2) is included as a co-catalyst, a molar ratio of the silane compound with respect to the carboxylic acid compound having a carbon-carbon triple bond is preferably from 0.05 to 20, and more preferably from 0.1 to 10. When it is equal to or more than the lower limit value of this range, the silylation rate is further improved. Further, the amount of acid in the solution is suppressed, and thickening is suppressed.

It is preferable to stabilize the group 8 metal catalyst and co-catalyst and make the catalyst and co-catalyst easy to handle by dissolving and diluting the group 8 metal catalyst and co-catalyst in various solvents. Examples of preferred solvents include hydrocarbon-based solvents such as hexane, cyclohexane, heptane, benzene, toluene, and xylene, halogenated hydrocarbon compounds, alcohols, glycols, ethers, esters, ketones, nitriles, and amides. Among these, alcohols, ketones, nitriles, and amides are preferred, isopropyl alcohol, acetone, N,N-dimethylformamide (DMF), and acetonitrile are more preferred, and acetonitrile is particularly preferred. The group 8 metal catalyst and co-catalyst may be diluted with two or more types of solvents.

### <Method of adding group 8 metal catalyst, co-catalyst, and silylating agent>

Although there are no particular limitations on the addition method, such as the order of addition of a group 8 metal catalyst, co-catalyst, and silylating agent during the hydrosilylation reaction, preferred methods are exemplified below. As a method for adding the group 8 metal catalyst, co-catalyst, and silylating agent during the hydrosilylation reaction, a method in which the group 8 metal catalyst and a carboxylic acid compound having a carbon-carbon triple bond dissolved in the above solvent are used as a premix to form colloidal particles of the group 8 metal catalyst in advance, and are added into a reaction solution containing an unsaturated group-containing organic polymer, followed by addition of a silylating agent for hydrosilylation can be mentioned. In addition, as a method for adding the group 8 metal catalyst, co-catalyst, and silylating agent during the hydrosilylation reaction, a method in which the group 8 metal catalyst and a carboxylic acid compound having a carbon-carbon triple bond are each added into a reaction solution containing an unsaturated group-containing organic polymer, followed by addition of a silylating agent for hydrosilylation can be mentioned. Since it is likely that the dispersibility of the metal catalyst improves and the hydrosilylation reaction is facilitated by forming colloidal particles of the group 8 metal catalyst in advance, it is preferable to add a premix into the reaction solution. In addition, when a carboxylic acid compound having a carbon-carbon double bond is included as a co-catalyst, it is preferable to add the carboxylic acid compound having a carbon-carbon double bond into the reaction solution, and then to add the above premix into the reaction solution. Furthermore, when a silane compound is included as a co-catalyst, the silane compound is preferably included in the above premix.

### <Reaction conditions>

The hydrosilylation reaction can be carried out in a solvent-free system or in the presence of a solvent. As a solvent for the hydrosilylation reaction, hydrocarbons, halogenated hydrocarbons, ethers, and esters can be used, but it is preferable to use heptane, hexane, cyclohexane, benzene, toluene, xylene, and the like. Further, when the unsaturated group-containing organic polymer is a solid or a highly viscous liquid, it is preferable to use a solvent in order to reduce the viscosity of the reaction solution.

The gas phase portion of a reactor when carrying out the hydrosilylation reaction may be composed only of an inert gas such as nitrogen or helium, however, oxygen or the like may be present.

When introducing oxygen into the gas phase portion, the hydrosilylation reaction can be carried out in the presence of an antioxidant from the viewpoint of suppressing oxidation of the reaction solvent. Although the antioxidant is not particularly limited, phenol-based antioxidants and amine-based antioxidants having the function of radical chain inhibitors can be used. As the phenol-based antioxidant, for example, 2,6-di-tert-butyl-p-cresol, 2,6-di-tert-butylphenol, 2,4-dimethyl-6-tert-butylphenol, 2,2'-methylenebis(4-methyl-6-tert-butylphenol), 4,4'-butylidenebis(3-methyl-6-tert-butylphenol), 4,4'-thiobis(3-methyl-6-tert-butylphenol), tetrakis{ methylene-3(3,5-di-tert-butyl-4-hydroxyphenyl)propionate}methane, 1,1,3-tris(2-methyl-4-hydroxy-5-tert-butylphenyl)butane, and the like can be used. As the amine-based antioxidant, for example, phenyl-β-naphthylamine, α-naphthylamine, N,N'-di-sec-butyl-p-phenylenediamine, phenothiazine, N,N'-diphenyl-p-phenylenediamine, and the like can be used.

The reaction temperature of the hydrosilylation reaction is preferably 40°C or higher and 150°C or lower, and more preferably 40°C or higher and 100°C or lower.

### <Reactive silicon group-containing organic polymer>

The type of organic polymer, Mn, and Mw/Mn of the reactive silicon group-containing organic polymer are the same as those described above for the unsaturated group-containing organic polymer, and the preferred ranges are also the same.

The number of reactive silicon groups per molecule is preferably from 0.8 to 8.0, and more preferably from 0.8 to 6.0.

Further, the silylation rate is preferably from 80 to 100 mol%, more preferably from 85 to 100 mol%, and particularly preferably from 90 to 100 mol%.

### <Reactive silicon group-containing oxyalkylene polymer>

A reactive silicon group-containing oxyalkylene polymer is a polymer having a repeating unit based on a reactive silicon group and an oxyalkylene monomer. The reactive silicon group-containing oxyalkylene polymer is composed of a main chain and a terminal group, the main chain has a residue of an initiator and a repeating unit based on an oxyalkylene monomer, and the terminal group has a reactive silicon group. The main chain is preferably composed of a residue of an initiator and a repeating unit based on an oxyalkylene monomer.

In the reactive silicon group-containing oxyalkylene polymer, the oxyalkylene monomer, the number of terminal groups within one molecule, Mn, and Mw/Mn are the same as those described above for the unsaturated group-containing oxyalkylene polymer, and the preferred ranges are also the same.

The number of reactive silicon groups within one molecule of the reactive silicon group-containing oxyalkylene polymer is preferably from 0.72 to 8.0, and more preferably from 0.8 to 6.0.

The number of reactive silicon groups per terminal group of the reactive silicon group-containing oxyalkylene polymer is preferably from 0.8 to 3.0, and more preferably from 0.9 to 2.0.

### <Reactive silicon group-containing (meth)acrylate polymer>

A reactive silicon group-containing (meth)acrylate polymer is a polymer having a reactive silicon group and a repeating unit based on an alkyl acrylate monomer or an alkyl methacrylate monomer.

The monomer constituting the reactive silicon group-containing (meth)acrylate polymer, the number of terminal groups within one molecule, Mn, and Mw/Mn are the same as those described above for the unsaturated group-containing (meth)acrylate polymer.

The number of reactive silicon groups within one molecule of the reactive silicon group-containing (meth)acrylate polymer is preferably from 0.8 to 8.0, and more preferably from 0.8 to 6.0.

### (Reactive silicon group)

The reactive silicon group has a hydrolyzable group bonded to a silicon atom and can be crosslinked by forming a siloxane bond. A reaction for forming a siloxane bond is facilitated by a curing catalyst. The reactive silicon group is represented by the following Formula (1).

-SiRₐX₃₋ₐ Formula (1)

[In the Formula (1), R is a monovalent organic group having 1 to 20 carbon atoms and represents an organic group other than a hydrolyzable group, and X represents a hydroxyl group, a halogen atom, or a hydrolyzable group; a is an integer from 0 to 2; when a is 2, R groups may be the same as or different from each other, and when a is 0 or 1, X groups may be the same as or different from each other.]

In the above Formula (1), R represents a monovalent organic group having 1 to 20 carbon atoms. R does not contain a hydrolyzable group.

R is preferably at least one selected from the group consisting of a hydrocarbon group having 1 to 20 carbon atoms and a triorganosiloxy group.

R is preferably at least one selected from the group consisting of an alkyl group, a cycloalkyl group, an aryl group, an α-chloroalkyl group and a triorganosiloxy group, and is more preferably at least one selected from the group consisting of a linear or branched alkyl group having 1 to 4 carbon atoms, a cyclohexyl group, a phenyl group, a benzyl group, an α-chloromethyl group, a trimethylsiloxy group, a triethylsiloxy group and a triphenylsiloxy group. A methyl group, an ethyl group, or an α-chloromethyl group is preferred from the viewpoint of favorable curability of a polymer having a reactive silicon group and favorable stability of a curable composition, and a methyl group is more preferred from the viewpoint of easy availability.

In the above Formula (1), X represents a hydroxyl group, a halogen atom, or a hydrolyzable group. X groups may be the same as or different from each other.

Examples of the hydrolyzable group include an alkoxy group, an acyloxy group, a ketoximate group, an amino group, an amide group, an acid amide group, an aminooxy group, a sulfanyl group, and an alkenyloxy group.

An alkoxy group is preferred because it is moderately hydrolyzable and easy to handle. The alkoxy group is preferably a methoxy group, an ethoxy group or an isopropoxy group, and more preferably a methoxy group or an ethoxy group. When the alkoxy group is a methoxy group or an ethoxy group, a siloxane bond is rapidly formed, a crosslinked structure is easily formed in a cured product, and physical property values of the cured product are likely to be favorable.

In the above Formula (1), a is an integer from 0 to 2. When a is 2, R groups may be the same as or different from each other. When a is 0 or 1, X groups may be the same as or different from each other. Since the physical property values of the cured product tend to be excellent, a is preferably 0 or 1, and more preferably 1.

Examples of the reactive silicon group represented by the above Formula (1) include a trimethoxysilyl group, a triethoxysilyl group, a triisopropoxysilyl group, a tris(2-propenyloxy)silyl group, a triacetoxysilyl group, a dimethoxymethylsilyl group, a diethoxymethylsilyl group, a dimethoxyethylsilyl group, a methyldiisopropoxysilyl group, an (α-chloromethyl)dimethoxysilyl group, and an (α-chloromethyl)diethoxysilyl group. A trimethoxysilyl group, a triethoxysilyl group, a dimethoxymethylsilyl group and a diethoxymethylsilyl group are preferred, and a dimethoxymethylsilyl group and a trimethoxysilyl group are more preferred, from the viewpoint of obtaining high activity and favorable curability.

### <Curable composition>

The curable composition is obtained by mixing the above reactive silicon group-containing organic polymer and other necessary components.

The content ratio of the reactive silicon group-containing organic polymer with respect to the total mass of the curable composition is preferably from 1 to 50% by mass, more preferably from 1 to 45% by mass, and still more preferably from 2 to 40% by mass. When it is equal to or less than the upper limit value of the above range, the cured product exhibits better strength, and the elongation properties are further improved.

### [Other components]

Examples of other components described above include curable compounds other than the reactive silicon group-containing organic polymers, curing catalysts (silanol condensation catalysts), fillers, plasticizers, thixotropic agents, stabilizers, adhesion-imparting agents, physical property modifiers, dehydrating agents, adhesion-imparting resins, reinforcing materials such as fillers, surface modifiers, flame retardants, foaming agents, solvents, and silicates.

Conventionally known components described in International Patent Publication No. 2013/180203, International Patent Publication No. 2014/192842, International Patent Publication No. 2016/002907, Japanese Unexamined Patent Application, First Publication No. 2014-88481, Japanese Unexamined Patent Application, First Publication No. 2015-10162, Japanese Unexamined Patent Application, First Publication No. 2015-105293, Japanese Unexamined Patent Application, First Publication No. 2017-039728, Japanese Unexamined Patent Application, First Publication No. 2017-214541 and the like can be used in combination without limitation as other components. Two or more types of each component may be used in combination.

### [Mechanism of action]

It is thought that by adding a carboxylic acid compound having a carbon-carbon triple bond to a group 8 metal catalyst, the carbonyl group coordinates to a metal atom through an unsaturated bond to produce nano-sized colloidal particles of the metal catalyst. It is conceivable that the above metal catalyst is dispersed and stabilized as colloidal particles, thereby increasing the catalytic activity. As a result, it is presumed that the hydrosilylation reaction is promoted to produce a reactive silicon group-containing organic polymer with a high silylation rate.

In the present invention, it is thought that since a carboxylic acid compound having a carbon-carbon triple bond coordinates efficiently to a metal atom in the above metal catalyst, high dispersion stability can be achieved even if the amount of the above carboxylic acid compound added is smaller.

It is considered that by further including a silane compound as a co-catalyst, the silane compound is added to the unsaturated bond of the carboxylic acid compound having a carbon-carbon triple bond to form a carboxylic acid/silane compound adduct having a carbon-carbon triple bond, and this adduct coordinates to the above metal catalyst, thereby further enhancing the dispersion stability of the colloidal particles of the metal catalyst and further enhancing the catalytic activity.

It is conceivable that when a carboxylic acid compound having a carbon-carbon triple bond is combined with a silane compound, the carbon-carbon triple bond can be made to remain even if a carboxylic acid/silane compound adduct having a carbon-carbon triple bond is formed. Therefore, it is thought that coordinating properties to the above metal catalyst and dispersion stability of colloidal particles of the coordinated metal catalyst can both be achieved at high levels, and the catalytic activity can be further enhanced.

### [Application]

As applications of the curable composition containing the reactive silicon group-containing organic polymer of the present invention, adhesives, sealing materials (for example, elastomeric sealing materials for construction, sealing materials for double glazing, sealing materials for rust prevention and waterproofing of glass edges, sealing materials for back surfaces of solar cells, building sealants, marine sealants, automobile sealants, and road sealants), and electrical insulating materials (insulating coating materials for electric wires and cables) are suitable. In particular, it is suitable for adhesive applications requiring high modulus, favorable tensile strength and elongation properties of the cured product.

### [Examples]

The present invention will be specifically described below with reference to Examples, but the present invention is not limited by the following description.

### <<Measurement method/evaluation method>>

### <Mn, Mw/Mn>

Mw, Mn and Mw/Mn were obtained by using HLC-8220GPC (name of a product manufactured by Tosoh Corporation), TSKgel Supermultipore HZ-M columns (name of a product manufactured by Tosoh Corporation) and tetrahydrofuran as a solvent, setting the sample pump to 0.350 mL/min, the reference pump to 0.350 mL/min, the detector temperature to 40°C and the collection time to 6 to 15 minutes, and analyzing the peaks appearing between collection times of 6 and 11 minutes.

### <Hydroxyl value of oxyalkylene polymer>

The hydroxyl value (mgKOH/g) present in an oxyalkylene polymer was analyzed using a method for measuring a hydroxyl value in accordance with JIS K1557:2007.

### <Method for measuring unsaturated group value>

The unsaturated group value (hereinafter referred to as USV) of a polymer was measured in accordance with a method for measuring an unsaturated group value (Wijs method). That is, a polymer (approximately 2 g) was placed in an Erlenmeyer flask, accurately weighed, and dissolved by adding 40 ml of chloroform thereto. After accurately measuring and adding a Wijs reagent using a 20 ml transfer pipette, the flask was left to stand in a cool, dark place for 1 hour. An aqueous potassium iodide solution prepared by dissolving potassium iodide (2 g) in 100 ml of water was added with a few drops of starch solution, and the resulting mixture was added into the flask. Then, N/10 sodium thiosulfate was added dropwise thereto while stirring, and the point at which the solution in the flask became colorless and transparent was taken as the end point. Based on the end point, the unsaturated group value was determined using the following formula. It should be noted that for the blank test titration, the above operation was performed using chloroform to which no polymer was added. Unsaturated group value (mmol/g) = (((blank test titer (ml)) - (sample liquid titer (ml))) × (titer of sodium thiosulfate solution)) ÷ (20 × sample (g))

### <Silylation rate>

The silylation rate of a polymer was calculated from a ¹H-NMR internal standard method.

The number of terminal groups per molecule in the oxyalkylene polymers in Tables 1 and 2 is the number of hydroxyl groups in the initiator.

The number of reactive silicon groups per molecule was measured by the ¹H-NMR internal standard method.

### <Evaluation of tensile properties (H-type test)>

An H-type test specimen was produced and the tensile properties were evaluated in accordance with "Testing methods of sealants for sealing and glazing in buildings" in JIS A 1439:2016.

A curable composition to be measured was filled into a mold having a thickness of 2 mm, cured at a temperature of 23°C and a humidity of 50% for 7 days, and further cured at a temperature of 50°C and a humidity of 65% for 7 days. The obtained cured product was subjected to a tensile test at a tensile rate of 500 mm/min with a Tensilon testing machine, and modulus (M50, unit: N/mm²) which was the stress when stretched by 50%, modulus (M100, unit: N/mm²) which was the stress when stretched by 100%, tensile strength as the maximum cohesive strength (Tmax, unit: N/mm²) and the maximum elongation (Emax, unit: %) were measured.

The larger the values of M50 and M100, the harder the cured product; the larger the value of maximum cohesive strength, the higher the tensile strength of the cured product; and the larger the value of maximum elongation, the better the elongation of the cured product.

Cases 1 to 24 are Examples of the present invention, and Cases 25 to 38 are Comparative Examples.

### (Case 1: polymer A1)

Propylene oxide was polymerized using a polyoxypropylene glycol as an initiator and a zinc hexacyanocobaltate complex with t-butyl alcohol as a ligand (hereinafter also referred to as "TBA-DMC catalyst") as a catalyst to obtain a hydroxyl group-containing oxyalkylene polymer in which two terminal groups were hydroxyl groups (precursor polymer P1). The hydroxyl value of the obtained precursor polymer P1 was 6.2 mgKOH/g.

1.05 molar equivalents of sodium methoxide relative to the hydroxyl groups of the precursor polymer P1 were added, and methanol was removed by distillation under reduced pressure. An excess amount of allyl chloride was added and reacted with respect to the hydroxyl groups of the precursor polymer P1, and unreacted allyl chloride was removed under reduced pressure. Metal salts were removed by purification to obtain an unsaturated group-containing oxyalkylene polymer in which the hydroxyl groups were converted to allyloxy groups (precursor polymer Q1). The USV of the obtained precursor polymer Q1 was 0.12 mmol/g.

After adding crotonic acid as a carboxylic acid compound B (carboxylic acid compound having a carbon-carbon double bond; the same applies hereinafter) to the precursor polymer Q1 in an amount of 1 mol with respect to 1 mol of unsaturated groups in the precursor polymer Q1, hexachloroplatinic (IV) acid hexahydrate (6.5 mg with respect to 1,000 g of the precursor polymer Q1) as a platinum catalyst and phenylpropiolic acid as a carboxylic acid compound A (carboxylic acid compound having a carbon-carbon triple bond; the same applies hereinafter) (9.2 mg with respect to 1,000 g of the precursor polymer Q1) were mixed (platinum catalyst: carboxylic acid compound A = 1:5 (molar ratio)), and a solution obtained by dissolving triethylsilane as a silane compound C in acetonitrile in a molar ratio of 1:1 with respect to the carboxylic acid compound A was further added thereto. 1.1 mol of dimethoxymethylsilane as a silylating agent was added with respect to 1 mol of the unsaturated groups of the precursor polymer Q1 and reacted at 70°C for 3 hours, and then unreacted silylating agent was removed under reduced pressure to obtain a polymer A1, which was a reactive silicon group-containing oxyalkylene polymer. The number of terminal groups per molecule of the obtained polymer A1 was 2, the number of reactive silicon groups introduced per molecule was 2.0, the silylation rate was 99.5%, and the Mn was 23,000. The results are shown in Table 1 (hereinafter, they are shown in the same manner in Table 1 or 2).

### (Case 2: polymer A2)

The platinum catalyst in Case 1 was changed to a platinum (0)-1,3-divinyl-1,1,3,3-tetramethyldisiloxane complex (Karstedt catalyst) (6.1 mg with respect to 1,000 g of the precursor polymer Q1). Apart from that, the same operation as in Case 1 was carried out to obtain a polymer A2, which was a reactive silicon group-containing oxyalkylene polymer.

### (Case 3: polymer A3)

The carboxylic acid compound A in Case 1 was changed to methyl phenylpropiolate. Apart from that, the same operation as in Case 1 was carried out (the amount of the carboxylic acid compound A was changed without changing the amount of the platinum catalyst so that the molar ratio of (platinum catalyst): (carboxylic acid compound A) was 1:5); the same applies to Cases 4 to 10 and Cases 33 to 39, provided that in Cases 33 to 39, the molar ratio of (platinum catalyst): (alternative compound to carboxylic acid compound A) was 1:5) to obtain a polymer A3, which was a reactive silicon group-containing oxyalkylene polymer.

### (Case 4: polymer A4)

The carboxylic acid compound A in Case 1 was changed to propiolic acid. Apart from that, the same operation as in Case 1 was carried out to obtain a polymer A4, which was a reactive silicon group-containing oxyalkylene polymer.

### (Case 5: polymer A5)

The carboxylic acid compound A in Case 1 was changed to 2-butynoic acid. Apart from that, the same operation as in Case 1 was carried out to obtain a polymer A5, which was a reactive silicon group-containing oxyalkylene polymer.

### (Case 6: polymer A6)

The carboxylic acid compound A in Case 1 was changed to 2-heptynoic acid. Apart from that, the same operation as in Case 1 was carried out to obtain a polymer A6, which was a reactive silicon group-containing oxyalkylene polymer.

### (Case 7: polymer A7)

The carboxylic acid compound A in Case 1 was changed to 2-methyl-3-butynoic acid. Apart from that, the same operation as in Case 1 was carried out to obtain a polymer A7, which was a reactive silicon group-containing oxyalkylene polymer.

### (Case 8: polymer A8)

The carboxylic acid compound A in Case 1 was changed to 2-hydroxy-3-butynoic acid. Apart from that, the same operation as in Case 1 was carried out to obtain a polymer A8, which was a reactive silicon group-containing oxyalkylene polymer.

### (Case 9: polymer A9)

The carboxylic acid compound A in Case 1 was changed to 3-butynoic acid. Apart from that, the same operation as in Case 1 was carried out to obtain a polymer A9, which was a reactive silicon group-containing oxyalkylene polymer.

### (Case 10: polymer A10)

The carboxylic acid compound A in Case 1 was changed to acetylenedicarboxylic acid. Apart from that, the same operation as in Case 1 was carried out to obtain a polymer A10, which was a reactive silicon group-containing oxyalkylene polymer.

### (Case 11: polymer A11)

The silylating agent in Case 1 was changed to trimethoxysilane. Apart from that, the same operation as in Case 1 was carried out to obtain a polymer A11, which was a reactive silicon group-containing oxyalkylene polymer.

### (Case 12: polymer A12)

The same operation as in Case 1 was carried out to obtain, in place of the precursor polymer P1 in Case 1, a hydroxyl group-containing oxyalkylene polymer (precursor polymer P2) in which two terminal groups were hydroxyl groups and having a different degree of polymerization from that of the precursor polymer P1. The hydroxyl value of the obtained precursor polymer P2 was 7.5 mgKOH/g.

1.15 molar equivalents of sodium methoxide relative to the hydroxyl groups of the precursor polymer P2 were added, and methanol was removed by distillation under reduced pressure. Subsequently, 1.05 molar equivalents of allyl glycidyl ether relative to the hydroxyl groups of the precursor polymer P2 were added, and the resulting mixture was reacted at 130°C for 2 hours. Furthermore, 0.28 molar equivalents of sodium methoxide relative to the hydroxyl groups of the precursor polymer P2 were added, and methanol was removed. Then, 2.10 molar equivalents of allyl chloride relative to the hydroxyl groups of the precursor polymer P2 were added, the resulting mixture was reacted at 130°C for 2 hours, and unreacted allyl chloride was removed under reduced pressure. Metal salts were removed by purification to obtain an unsaturated group-containing oxyalkylene polymer (precursor polymer Q2) having 2.0 allyl groups per terminal group. The USV of the obtained precursor polymer Q2 was 0.29 mmol/g.

1 mol of crotonic acid as the carboxylic acid compound B with respect to 1 mol of unsaturated groups of the precursor polymer Q2 was added and dissolved. Next, hexachloroplatinic (IV) acid hexahydrate (6.5 mg with respect to 1,000 g of the precursor polymer Q2) as a platinum catalyst and phenylpropiolic acid as a carboxylic acid compound A (9.2 mg with respect to 1,000 g of the precursor polymer Q2) were mixed (platinum catalyst: carboxylic acid compound A = 1:5 (molar ratio)), and a solution obtained by dissolving triethylsilane as a silane compound C in acetonitrile in a molar ratio of 1:1 with respect to the carboxylic acid compound A was further added thereto. Furthermore, 1.1 mol of dimethoxymethylsilane was added with respect to 1 mol of unsaturated groups in the precursor polymer Q2 and reacted at 70°C for 5 hours, and then unreacted dimethoxymethylsilane was removed under reduced pressure to obtain a polymer A12, which was a reactive silicon group-containing oxyalkylene polymer.

### (Case 13: polymer A13)

1.05 molar equivalents of sodium methoxide relative to the hydroxyl groups of the precursor polymer P2 were added, and methanol was removed by distillation under reduced pressure. Subsequently, an excess amount of propargyl bromide with respect to the hydroxyl groups of the precursor polymer P2 was reacted to obtain an oxyalkylene polymer (precursor polymer Q3) having 1.0 propargyl groups per terminal group. The USV of the obtained precursor polymer Q3 was 0.29 mmol/g.

Crotonic acid as the carboxylic acid compound B was added to and dissolved in the precursor polymer Q3 in an amount of 2 mol with respect to 1 mol of the unsaturated group (carbon-carbon triple bond) of the precursor polymer Q3. Next, hexachloroplatinic (IV) acid hexahydrate (6.5 mg with respect to 1,000 g of the precursor polymer Q3) as a platinum catalyst and phenylpropiolic acid as a carboxylic acid compound A (9.2 mg with respect to 1,000 g of the precursor polymer Q3) were mixed (platinum catalyst: carboxylic acid compound A = 1:5 (molar ratio)), and a solution obtained by dissolving triethylsilane as a silane compound C in acetonitrile in a molar ratio of 1:1 with respect to the carboxylic acid compound A was further added thereto. Furthermore, 4.0 mol of dimethoxymethylsilane was added with respect to 1 mol of the propargyl group of the precursor polymer Q3 and reacted at 70°C for 3 hours, and then unreacted dimethoxymethylsilane was removed under reduced pressure to obtain a polymer A13, which was a reactive silicon group-containing oxyalkylene polymer.

### (Case 14: polymer A14)

8.39 g of cuprous bromide and 112 mL of acetonitrile were added to a 2L flask, and the resulting mixture was heated and stirred at 70°C for 20 minutes under a nitrogen stream. 17.6 g of diethyl 2,5-dibromoadipate, 130 mL of ethyl acrylate, 720 mL of butyl acrylate and 251 g of stearyl acrylate were added thereto, and the resulting mixture was further heated and stirred at 70°C for 40 minutes. 0.41 mL of pentamethyldiethylenetriamine (hereinafter also referred to as "triamine") was added thereto to initiate the reaction. Subsequently, heating and stirring were continued at 70°C, and 2.05 mL of triamine was further added. After 330 minutes from the initiation of the reaction, 244 mL of 1,7-octadiene and 4.1 mL of triamine were added, followed by heating and stirring at 70°C, and heating was stopped 570 minutes after the initiation of the reaction. The obtained reaction solution was diluted with toluene and filtered, and the filtrate was subjected to a heat treatment under reduced pressure to obtain an unpurified acrylate polymer having an alkenyl group as a terminal group. The number of alkenyl groups per molecule of the unpurified acrylate polymer was 2.0. Furthermore, under a nitrogen atmosphere, the total amount of unpurified acrylate polymer, 17.2 g of potassium acetate, and 700 mL of N,N-dimethylacetamide methyl (hereinafter referred to as "DMAc") were added to a 2 L flask, and the resulting mixture was heated and stirred at 100°C for 10 hours. The reaction solution was heated under reduced pressure to remove DMAc, and toluene was added thereto, followed by filtration. The filtrate was heated under reduced pressure to remove volatile matter, the residue was added to a 2 L flask, 100 g of an adsorbent (a mixture of Kyowaad 500SN and Kyowaad 700SN (both of which are names of products manufactured by Kyowa Chemical Industry Co., Ltd.) in a mass ratio of 1:1) was added thereto, and the resulting mixture was heated and stirred at 130°C for 9 hours under a nitrogen stream. The resulting mixture was diluted with toluene, filtered to remove the adsorbent, and the toluene in the filtrate was removed by distillation under reduced pressure to obtain an unsaturated group-containing acrylate polymer (precursor polymer Q4).

Crotonic acid as the carboxylic acid compound B was added to and dissolved in the precursor polymer Q4 in an amount of 1 mol with respect to 1 mol of unsaturated groups of the precursor polymer Q4. Next, hexachloroplatinic (IV) acid hexahydrate (0.00065% by mass with respect to the precursor polymer Q4) as a platinum catalyst and phenylpropiolic acid as a carboxylic acid compound A (0.00092% by mass with respect to the precursor polymer Q4) were mixed in a molar ratio of 1:5, and a solution obtained by dissolving triethylsilane as a silane compound C in acetonitrile in a molar ratio of 1:1 with respect to the carboxylic acid compound A was further added thereto. Furthermore, 1.1 mol of trimethoxysilane was added with respect to 1 mol of the unsaturated groups of the precursor polymer Q4 and reacted at 70°C for 3 hours, and then unreacted trimethoxysilane was removed under reduced pressure to obtain a polymer A14, which was a reactive silicon group-containing (meth)acrylate polymer.

### (Case 15: polymer A15)

The initiator in Case 1 was changed to n-butyl alcohol and the same operation as in Case 1 was carried out to obtain: a hydroxyl group-containing oxyalkylene polymer (precursor polymer P3) in which one terminal group was a hydroxyl group; an unsaturated group-containing oxyalkylene polymer (precursor polymer Q5); and a polymer A15, which was a reactive silicon group-containing oxyalkylene polymer. The hydroxyl value of the obtained precursor polymer P3 was 11.2 mgKOH/g, and the USV of the precursor polymer Q5 was 0.22 mmol/g.

### (Case 16: polymer A16)

The initiator in Case 1 was changed to glycerin and the same operation as in Case 1 was carried out to obtain: a hydroxyl group-containing oxyalkylene polymer (precursor polymer P4) in which three terminal groups were hydroxyl groups; an unsaturated group-containing oxyalkylene polymer (precursor polymer Q6); and a polymer A16, which was a reactive silicon group-containing oxyalkylene polymer. The hydroxyl value of the obtained precursor polymer P4 was 7.0 mgKOH/g, and the USV of the precursor polymer Q6 was 0.14 mmol/g.

### (Case 17: polymer A17)

The initiator in Case 1 was changed to sorbitol and the same operation as in Case 1 was carried out to obtain: a hydroxyl group-containing oxyalkylene polymer (precursor polymer P5) in which six terminal groups were hydroxyl groups; an unsaturated group-containing oxyalkylene polymer (precursor polymer Q7); and a polymer A17, which was a reactive silicon group-containing oxyalkylene polymer. The hydroxyl value of the obtained precursor polymer P5 was 8.0 mgKOH/g, and the USV of the precursor polymer Q7 was 0.16 mmol/g.

### (Case 18: polymer A18)

The molar ratio of platinum catalyst and carboxylic acid compound A in Case 1 was changed to 1:0.04. Apart from that, the same operation as in Case 1 was carried out to obtain a polymer A18, which was a reactive silicon group-containing oxyalkylene polymer. It should be noted that the amounts of the platinum catalyst and the carboxylic acid compound B were the same as in Case 1, and the amounts of the carboxylic acid compound A and the silane compound C were changed. The same applies to Cases 20 to 22 below.

### (Case 19: polymer A19)

The molar ratio of platinum catalyst and carboxylic acid compound A in Case 1 was changed to 1:0.05. Apart from that, the same operation as in Case 1 was carried out to obtain a polymer A19, which was a reactive silicon group-containing oxyalkylene polymer.

### (Case 20: polymer A20)

The molar ratio of platinum catalyst and carboxylic acid compound A in Case 1 was changed to 1:20. Apart from that, the same operation as in Case 1 was carried out to obtain a polymer A20, which was a reactive silicon group-containing oxyalkylene polymer.

### (Case 21: polymer A21)

The molar ratio of platinum catalyst and carboxylic acid compound A in Case 1 was changed to 1:21. Apart from that, the same operation as in Case 1 was carried out to obtain a polymer A21, which was a reactive silicon group-containing oxyalkylene polymer.

### (Case 22: polymer A22)

The silane compound C in Case 1 was not used (an acetonitrile solution in which the silane compound C was not dissolved was added; hereafter, the same applies to Cases 25 to 39 in which the silane compound C was not used.). Apart from that, the same operation as in Case 1 was carried out to obtain a polymer A23, which was a reactive silicon group-containing oxyalkylene polymer.

### (Case 23: polymer A23)

The carboxylic acid compound B in Case 1 was not used. Apart from that, the same operation as in Case 1 was carried out to obtain a polymer A23, which was a reactive silicon group-containing oxyalkylene polymer.

### (Case 24: polymer A24)

The carboxylic acid compound B and the silane compound C in Case 1 were not used. Apart from that, the same operation as in Case 1 was carried out to obtain a polymer A24, which was a reactive silicon group-containing oxyalkylene polymer.

### (Case 25: polymer A25)

The carboxylic acid compound A, the carboxylic acid compound B and the silane compound C in Case 1 were not used. Apart from that, the same operation as in Case 1 was carried out to obtain a polymer A25, which was a reactive silicon group-containing oxyalkylene polymer.

### (Case 26: polymer A26)

The carboxylic acid compound A, the carboxylic acid compound B and the silane compound C in Case 12 were not used. Apart from that, the same operation as in Case 12 was carried out to obtain a polymer A26, which was a reactive silicon group-containing oxyalkylene polymer.

### (Case 27: polymer A27)

The carboxylic acid compound A, the carboxylic acid compound B and the silane compound C in Case 13 were not used. Apart from that, the same operation as in Case 13 was carried out to obtain a polymer A27, which was a reactive silicon group-containing oxyalkylene polymer.

### (Case 28: polymer A28)

The carboxylic acid compound A, the carboxylic acid compound B and the silane compound C in Case 14 were not used. Apart from that, the same operation as in Case 14 was carried out to obtain a polymer A28, which was a reactive silicon group-containing (meth)acrylate polymer.

### (Case 29: polymer A29)

The carboxylic acid compound A, the carboxylic acid compound B and the silane compound C in Case 15 were not used. Apart from that, the same operation as in Case 15 was carried out to obtain a polymer A29, which was a reactive silicon group-containing oxyalkylene polymer.

### (Case 30: polymer A30)

The carboxylic acid compound A, the carboxylic acid compound B and the silane compound C in Case 16 were not used. Apart from that, the same operation as in Case 16 was carried out to obtain a polymer A30, which was a reactive silicon group-containing oxyalkylene polymer.

### (Case 31: polymer A31)

The carboxylic acid compound A, the carboxylic acid compound B and the silane compound C in Case 17 were not used. Apart from that, the same operation as in Case 17 was carried out to obtain a polymer A31, which was a reactive silicon group-containing oxyalkylene polymer.

### (Case 32: polymer A32)

The carboxylic acid compound A in Case 24 was changed to butyric acid. Apart from that, the same operation as in Case 24 was carried out to obtain a polymer A32, which was a reactive silicon group-containing oxyalkylene polymer.

### (Case 33: polymer A33)

The carboxylic acid compound A in Case 24 was changed to formic acid. Apart from that, the same operation as in Case 24 was carried out to obtain a polymer A33, which was a reactive silicon group-containing oxyalkylene polymer.

### (Case 34: polymer A34)

The carboxylic acid compound A in Case 24 was changed to acetic acid. Apart from that, the same operation as in Case 24 was carried out to obtain a polymer A34, which was a reactive silicon group-containing oxyalkylene polymer.

### (Case 35: polymer A35)

The carboxylic acid compound A in Case 24 was changed to benzoic acid. Apart from that, the same operation as in Case 24 was carried out to obtain a polymer A35, which was a reactive silicon group-containing oxyalkylene polymer.

### (Case 36: polymer A36)

The carboxylic acid compound A in Case 24 was changed to 3,6-dimethyl-4-octyne-3,6-diol. Apart from that, the same operation as in Case 24 was carried out to obtain a polymer A36, which was a reactive silicon group-containing oxyalkylene polymer.

### (Case 37: polymer A37)

The carboxylic acid compound A in Case 24 was changed to 2-methyl-3-butyn-2-ol. Apart from that, the same operation as in Case 24 was carried out to obtain a polymer A37, which was a reactive silicon group-containing oxyalkylene polymer.

### (Case 38: polymer A38)

The carboxylic acid compound A in Case 24 was changed to 3,5-dimethyl-3-hexen-1-yne. Apart from that, the same operation as in Case 24 was carried out to obtain a polymer A38, which was a reactive silicon group-containing oxyalkylene polymer.

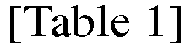

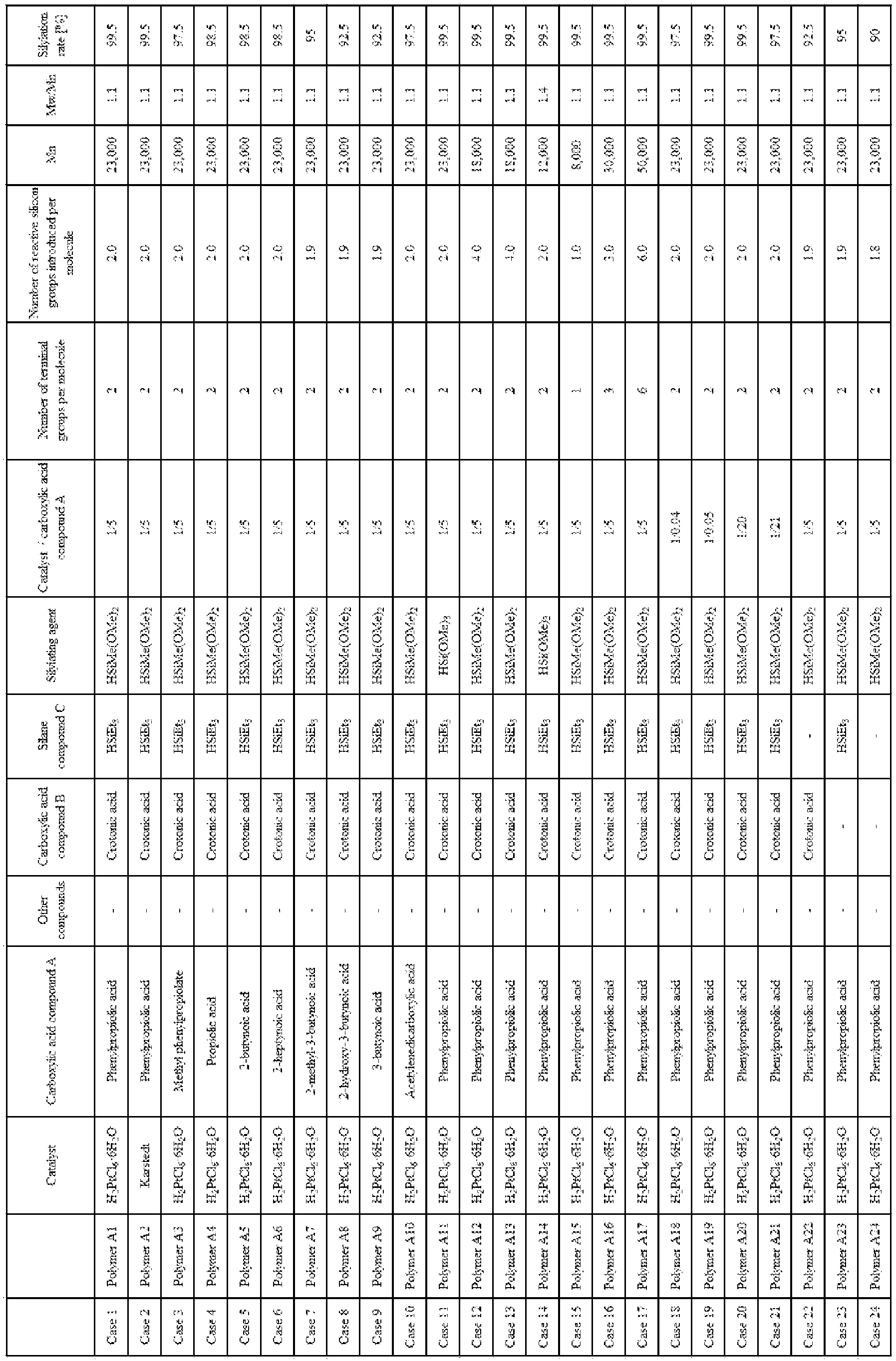

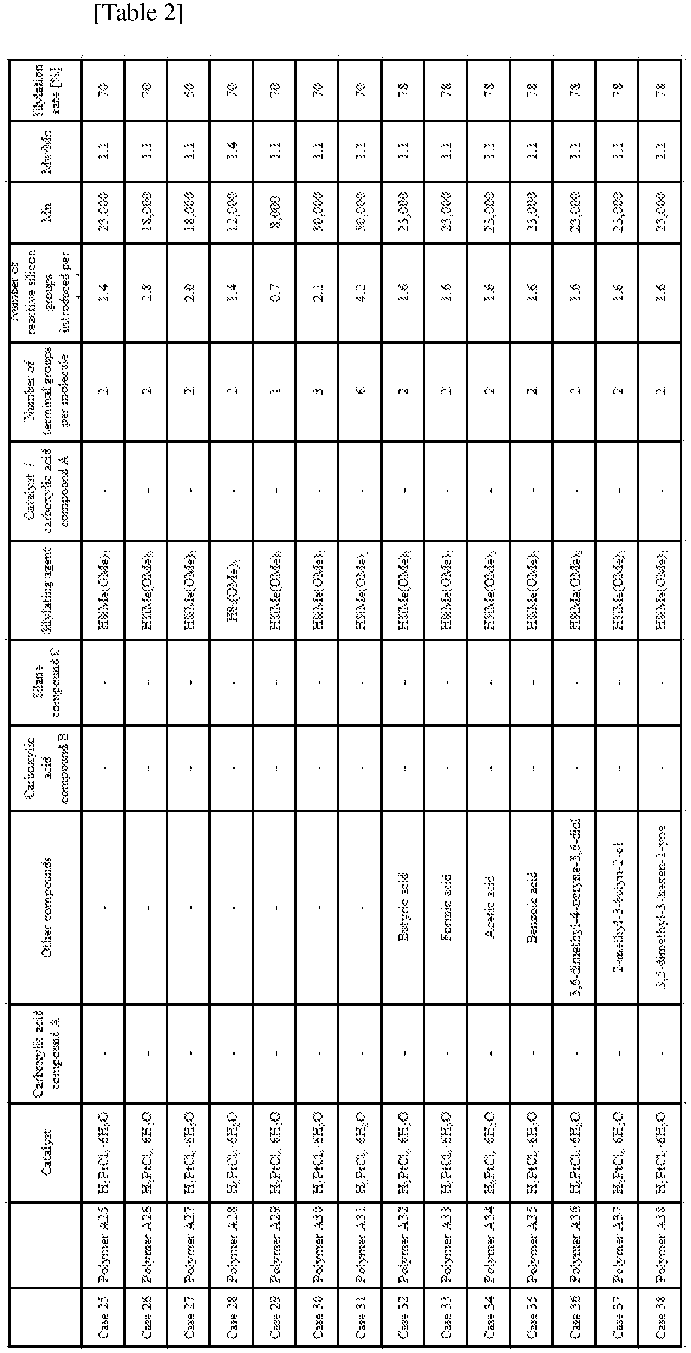

As shown in Cases 1 to 31, in Cases in which hydrosilylation was carried out in the presence of a group 8 metal catalyst and a carboxylic acid compound A (Cases 1 to 24), the silylation rates were higher and the hydrosilylation reactions were promoted, as compared to Cases in which hydrosilylation was carried out using only a group 8 metal catalyst (Cases 25 to 31). Furthermore, in the presence of compounds that did not correspond to the carboxylic acid compound A (Cases 32 to 38), the silylation rates did not become sufficiently high. As seen in Cases 1 to 23, by further adding the carboxylic acid compound B or the silane compound C in the presence of the group 8 metal catalyst and the carboxylic acid compound A, the silylation rates became even higher and the hydrosilylation reactions were further promoted.

### <Other components>

The additives listed in Tables 3 and 4 are as follows.
HAKUENKA CCR: product name of colloidal calcium carbonate manufactured by Shiraishi Kogyo Kaisha, Ltd.
WHITON SB: product name of heavy calcium carbonate manufactured by Shiraishi Kogyo Kaisha, Ltd.
R-820: product name of titanium oxide manufactured by Ishihara Sangyo Kaisha, Ltd.
DINP: SANSO CIZER DINP, product name of diisononyl phthalate manufactured by New Japan Chemical Co., Ltd.
DIDP: diisodecyl phthalate, manufactured by Mitsubishi Chemical Corporation.
PMLS4012: Preminol S4012, product name of a high molecular weight polyol with two hydroxyl groups per molecule and an Mn of 13,000, manufactured by AGC Inc.
SANSO CIZER EPS: product name of 4,5-epoxycyclohexane-1,2-dicarboxylic acid-di-2-ethylhexyl manufactured by New Japan Chemical Co., Ltd.
DISPARLON 6500: product name of a hydrogenated castor oil-based thixotropic agent manufactured by Kusumoto Chemicals, Ltd.
DISPARLON 305: product name of a hydrogenated castor oil-based thixotropic agent manufactured by Kusumoto Chemicals, Ltd.
Balloon 80GCA: product name of organic balloon manufactured by Matsumoto Yushi-Seiyaku Co., Ltd.
M309: ARONIX M-309, product name of a photocurable resin, manufactured by Toagosei Co., Ltd.
Glycerin monostearate: a reagent manufactured by Tokyo Chemical Industry Co., Ltd.
KBM-1003: product name of vinyltrimethoxysilane manufactured by Shin-Etsu Chemical Co., Ltd.
A-171: product name of vinyltrimethoxysilane manufactured by Momentive Performance Materials, Inc.
KBM-403: product name of 3-glycidyloxypropyltrimethoxysilane manufactured by Shin-Etsu Chemical Co., Ltd.
KBM-603: product name of 3-(2-aminoethylamino)propyltrimethoxysilane manufactured by Shin-Etsu Chemical Co., Ltd.
A-1120: product name of 3-(N-2-aminoethylamino)propyltrimethoxysilane manufactured by Momentive Performance Materials, Inc.
TINUVIN 765: product name of a tertiary amine-containing hindered amine-based light stabilizer manufactured by BASF Corporation.
TINUVIN 770: product name of a tertiary amine-containing hindered amine-based light stabilizer manufactured by BASF Corporation.
Sanol LS770: product name of a hindered amine-based light stabilizer manufactured by Sankyo Lifetech Co., Ltd.
IRGANOX 1010: product name of a hindered phenolic antioxidant manufactured by BASF Corporation.
TINUVIN 326: product name of a benzotriazole-based ultraviolet absorber manufactured by BASF Corporation.
TINUVIN 327: product name of a benzotriazole-based ultraviolet absorber manufactured by BASF Corporation.
Tung oil: an air oxidation curable compound manufactured by Kimura Corporation.
DBTDL: dibutyltin dilaurate
U-220H: product name of dibutyltin bis(acetylacetate) manufactured by Nitto Kasei Co., Ltd.
Stanoct: product name of stannous octoate manufactured by Yoshitomi Pharmaceutical Industries, Ltd.
Laurylamine: a reagent manufactured by Junsei Chemical Co., Ltd.
Glomax LL: product name of calcined kaolin manufactured by Takehara Kagaku Kogyo Co., Ltd.

### <<Preparation of curable composition>>

Curable compositions were prepared by adding polymers in amounts (parts by mass) shown in Tables 5 to 7 and additives in amounts (parts by mass) shown in Tables 3 and 4. The added amounts of each component shown in Tables 3 and 4 are values (unit: parts by mass) with respect to a total of 100 parts by mass of the polymer. It should be noted that with regard to the additive D4, the main agent shown in Table 3 and the curing agent shown in Table 4 were used in their respective added amounts.

Using the obtained curable compositions, evaluation of tensile properties (H-type test) was carried out. The results are shown in Tables 5 to 7. In Tables 5 and 6, the value indicated by (M100) means the value of M100.

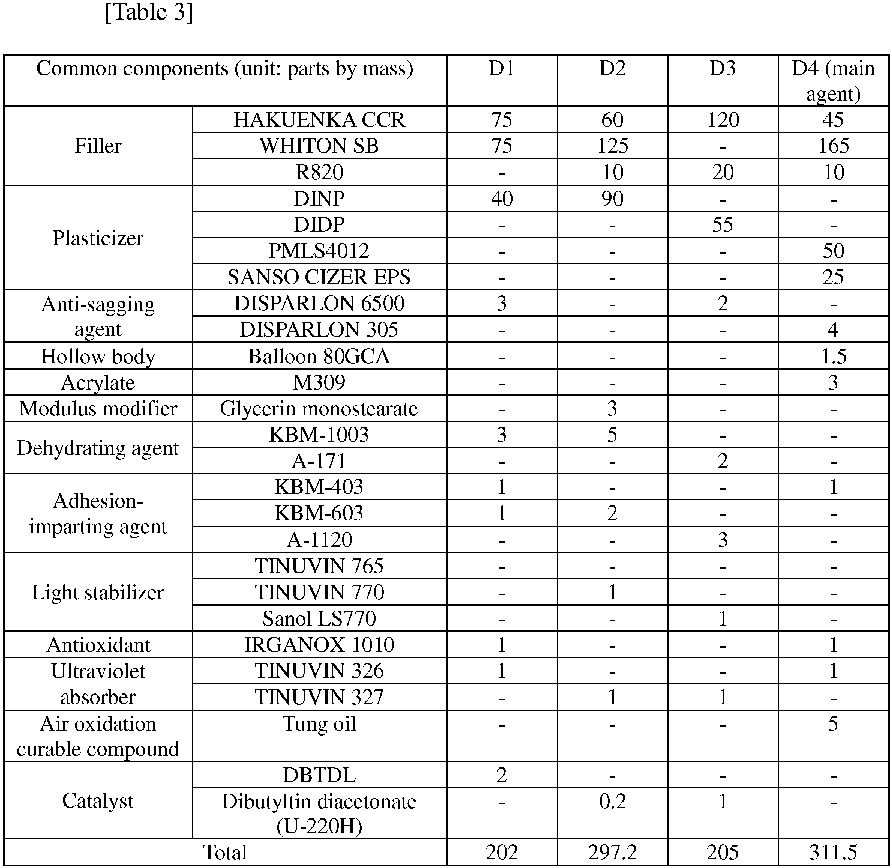

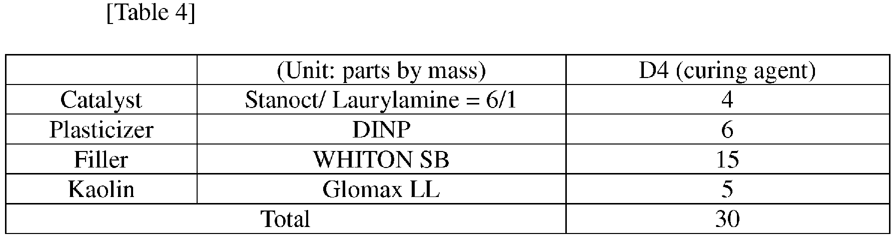

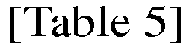

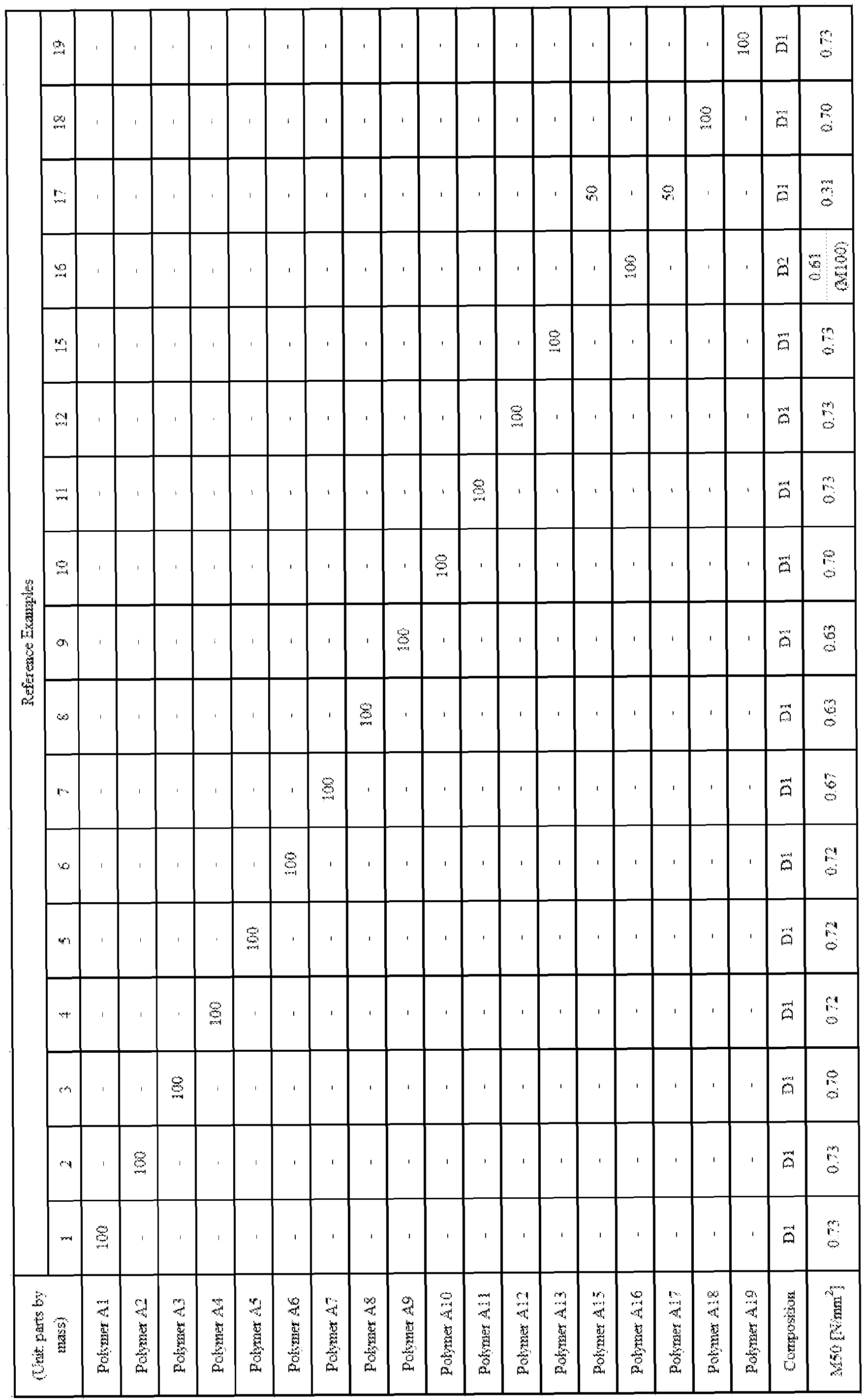

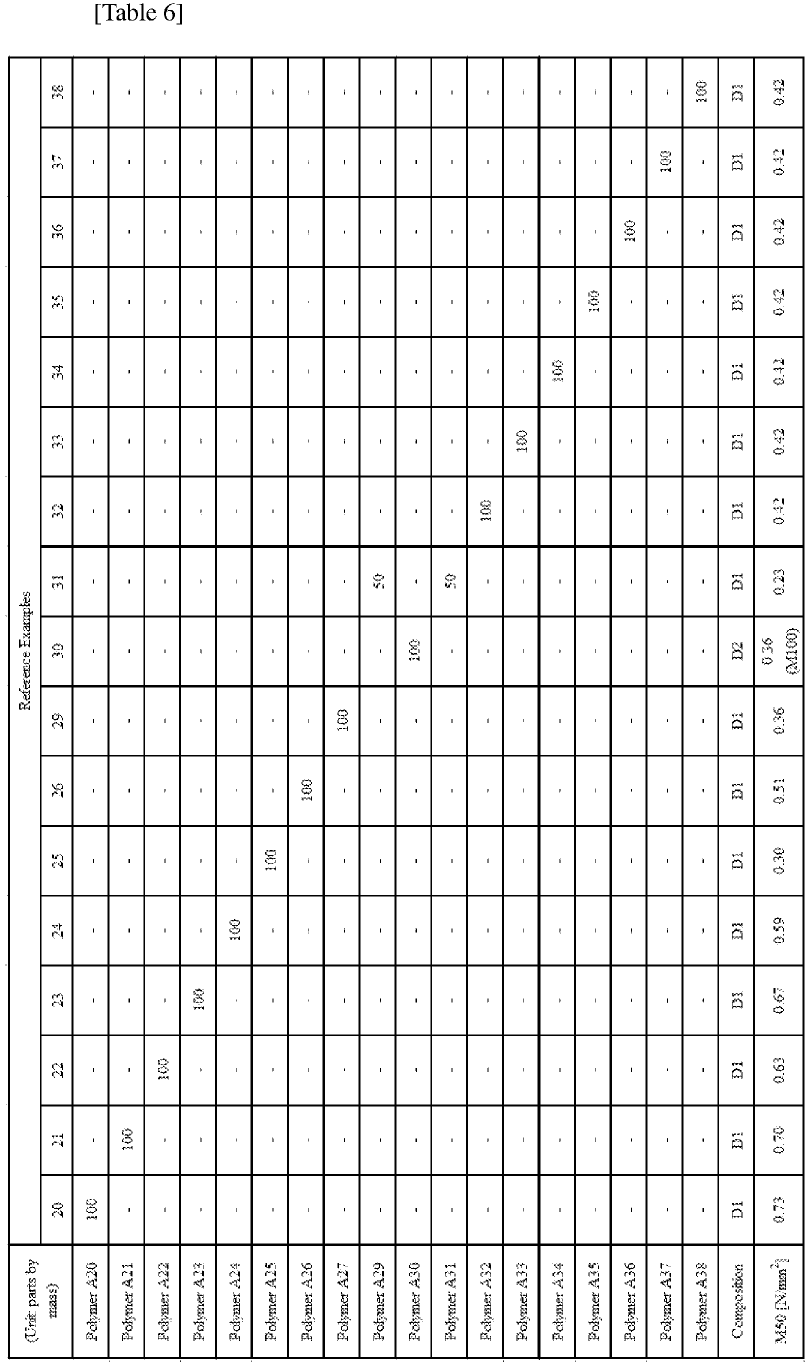

**[Table 7]**

| | Reference Examples | | | |
|---|---|---|---|---|
| | 13 | 14 | 27 | 28 |
| Polymer A12 | 70 | 70 | - | - |
| Polymer A14 | 30 | 30 | - | - |
| Polymer A26 | - | - | 70 | 70 |
| Polymer A28 | - | - | 30 | 30 |
| Composition | D2 | D4 | D2 | D4 |
| M50 [N/mm²] | 0.15 | 0.15 | 0.15 | 0.15 |
| Tmax [N/mm²] | 0.5 | 0.71 | 0.42 | 0.67 |
| Emax [%] | 792 | 661 | 251 | 193 |

### <Evaluation results>

As shown in Reference Examples 1 to 12, Reference Examples 15 to 26, and Reference Examples 29 to 38, curable compositions containing polymers with high silylation rates exhibited favorable M50 values. As shown in Reference Examples 13, 14, 27, and 28, when comparing Reference Examples 13 and 27, or 14 and 28, which had the same compositions, the curable composition of Reference Example 13 or 14 containing a polymer with a high silylation rate exhibited better results in Tmax and elongation than those in Reference Example 27 or 28 when the M50 value was adjusted to the same value.

## Claims

1. A method for producing a reactive silicon group-containing organic polymer having a reactive silicon group represented by the following Formula (1),
the method comprising reacting an unsaturated group-containing organic polymer with a silylating agent in the presence of a group 8 metal catalyst and a co-catalyst containing a carboxylic acid compound having a carbon-carbon triple bond,
-SiRₐX₃₋ₐ Formula (1)
wherein R is a monovalent organic group having 1 to 20 carbon atoms and represents an organic group other than a hydrolyzable group, and X represents a hydroxyl group, a halogen atom, or a hydrolyzable group;
a is an integer from 0 to 2;
when a is 2, R groups may be the same as or different from each other, and when a is 0 or 1, X groups may be the same as or different from each other.

2. The method for producing a reactive silicon group-containing organic polymer according to Claim 1,
wherein said group 8 metal catalyst comprises at least one metal selected from the group consisting of cobalt, nickel, ruthenium, rhodium, palladium, iridium, and platinum.

3. The method for producing a reactive silicon group-containing organic polymer according to Claim 1,
wherein said carboxylic acid compound having a carbon-carbon triple bond has 3 to 17 carbon atoms.

4. The method for producing a reactive silicon group-containing organic polymer according to Claim 1,
wherein said carboxylic acid compound having a carbon-carbon triple bond is a carboxylic acid compound having a carbon-carbon triple bond at an α-position carbon.

5. The method for producing a reactive silicon group-containing organic polymer according to Claim 1,
wherein a molar ratio of said carboxylic acid compound having a carbon-carbon triple bond with respect to said group 8 metal catalyst is from 0.01 to 25.

6. The method for producing a reactive silicon group-containing organic polymer according to Claim 1,
wherein said co-catalyst further contains a carboxylic acid compound having a carbon-carbon double bond.

7. The method for producing a reactive silicon group-containing organic polymer according to Claim 6,
wherein said carboxylic acid compound having a carbon-carbon double bond is a carboxylic acid compound having a carbon-carbon double bond at an α-position carbon.

8. The method for producing a reactive silicon group-containing organic polymer according to Claim 6,
wherein an amount of said carboxylic acid compound having a carbon-carbon double bond used is from 0.1 to 10 mol with respect to 1 mol of unsaturated groups in said unsaturated group-containing organic polymer.

9. The method for producing a reactive silicon group-containing organic polymer according to Claim 1,
wherein said co-catalyst further contains a silane compound represented by the following Formula (2),
HSiR¹₃ Formula (2)
wherein R¹ is a monovalent organic group having 1 to 20 carbon atoms, and represents an organic group other than a hydrolyzable group; and
R¹ groups may be the same as or different from each other.

10. The method for producing a reactive silicon group-containing organic polymer according to Claim 9,
wherein a molar ratio of said silane compound with respect to said carboxylic acid compound having a carbon-carbon triple bond is from 0.05 to 20.

11. The method for producing a reactive silicon group-containing organic polymer according to any one of Claims 1 to 10,
wherein said reactive silicon group-containing organic polymer is a polymer having a unit based on an oxyalkylene monomer.

12. The method for producing a reactive silicon group-containing organic polymer according to any one of Claims 1 to 10,
wherein said reactive silicon group-containing organic polymer is a polymer having a unit based on an alkyl acrylate monomer or an alkyl methacrylate monomer.
